# EUROPEAN PATENT APPLICATION

(11) **EP 1 837 746 A2**
(43) Date of publication of application: **26.09.2007**
(21) Application number: 06126755.5
(22) Date of filing: 21.12.2006
(51) Int. Cl.: G06F 3/048

(54) **Systems and software applications including tab panel elements**

(30) Priority: 23.12.2005 EP 05112921
(71) Applicant: SAP AG, 69190 Walldorf (DE)
(72) Inventor: Unser, Nicole, 69226, Nussloch (DE); Deggelmann, Martin, 69190, Walldorf (DE); Schira, Thomas, 69168, Wiesloch (DE)
(74) Representative: Richardt, Markus Albert

(57) **Abstract**

The present invention relates to a data processing system comprising
- at least one application program, the application program being adapted to receive a set of parameters for controlling a data processing operation being executable by the application program,
- means for mapping sub-sets of the set of parameters to tab panel element identifiers,
- a graphical user interface for providing a tab panel element for each of the tab panel element identifiers, each tab panel element being composed of a tab and a tab panel, each tab panel comprising data entry fields for entering data values for the sub-set of parameters being mapped to the respective tab panel element identifier,
- means for execution of the application program, the means being adapted to only use the data values of the sub-set of parameters entered in the data entry fields of a user selected tab panel out of the set of parameters mapped to tab panel element identifiers for controlling the data processing operation.

## Description

### Technical Field

The present invention relates to the field of data processing and more particularly to methods, computer program products and systems including tab panel elements, particularly as user interface elements.

### Background and related art

User interfaces, such as graphical user interfaces (GUls) provide a mechanism for a user to interact with a computer software application. A GUI typically includes various elements that display information to and/or receive input from a user. GUI elements are sometimes referred to as widgets and may include custom user interface components or standard components such as, for example, scroll bars, push buttons, check boxes, radio buttons, text panes and tab panel elements known in the form of tab strip control elements or, in short, tab panel elements. Most computer software applications available to date provide GUIs to more efficiently interact with users.

Tab strips allow a user to easily and comprehensively define different object components of an application on one screen and to navigate between them. Tab strips are also used to select or to input criteria for use in execution of logical functions such as a search, filter, sifting or the like. Examples can be seen in the documents US5,963,938, US 2002/0059297 A1 and US 2004/0085362 A1. Tab strips are usually grouped to a set. They may act like dividers in a notebook or the labels on a group of file folders. By using tab panel element controls, it is for example possible to define multiple pages for the same area of window or dialogue box in an application.

In the classic display of information on a computer screen, the user has the option to press forward and backward buttons, in order to navigate between multiple pages which provide different data entry fields, in order to provide all necessary data to an application. Using tab panel elements, in contrast to the classic screen, the user at once sees all the destinations he must call to accomplish a given task. Using this technique the user can comprehend a structure of an application more intuitively as with conventional techniques such as the go to menu. This reduces the learning expense and facilitates the usage. However, the content of all tab strips or sub-screens are relevant and valid at the same time. Pressing a dedicated control button being adapted to initiate a data processing operation accepts and uses all the data entered into the data entry fields of all tab strips, and the content of all tab strips or sub-screens are relevant and valid at the same time. Therefore, such tab strips cannot be used to provide excluding alternative conditions, information, parameters or definitions to an application.

The above description is based on the knowledge of the present inventors and not necessarily that known in the art.

### Summary of the invention

The present invention provides a data processing system comprising at least one application program, the application program being adapted to receive a set of parameters for controlling a data processing operation being executable by the application program. The data processing system further comprises means for mapping sub-sets of the set of parameters to tab panel element identifiers and a graphical user interface for providing a tab panel element for each of the tab panel element identifiers, each tab panel element being composed of a tab and a tab panel, each tab panel comprising data entry fields for entering data values for the sub-set of parameters being mapped to the respective tab panel element identifier. The data processing system further comprises means for execution of the application program, the means being adapted to only use the data values of the sub-set of parameters entered in data entry fields of a user selected tab panel out of the set of parameters mapped to tab panel element identifiers for controlling the data processing operation.

This data processing system has the advantage, that a user can select an appropriate tab panel element which can then be used to enter data values of the sub-sets of parameters necessary for controlling the data processing operation. Only the currently selected tab panel element with the respective data values of the sub-set of parameters entered in the respective data entry fields is exclusively used for controlling the data processing operation and information contained in all other tab panel elements is not considered. It should be pointed out that for the execution of the application program additional parameters which are not contained as data values in any of the tab panel elements can be used, such as user profile information and other information provided by the data processing system.

In accordance with an embodiment of the invention, the data processing system further comprises a dedicated control button being available in each of the tab panel elements, the control button being adapted to initiate the data processing operation. By for example using the dedicated control button, only the data values of the sub-set of parameters entered in the respective data entry fields of the currently selected tab panel are exclusively used to initiate the data processing operation and all other data values available in other data entry fields of other unselected tab panel elements are not considered.

In accordance with an embodiment of the invention, the data processing system further comprises means for mapping of sub-sets of parameters to tab panel element identifiers, the graphical user interface being adapted for a user input of the mapping. This enables a user to define personally adapted tab panel elements satisfying user specific needs for sub-sets of parameters.

In accordance with an embodiment of the invention the data processing system further comprises means for tracking and analyzing of a user group specific utilization of the parameters, the data processing system being adapted for user specific mapping of the sub-sets of the parameters to the tab panel element identifiers based on the tracking and analyzing of the user group specific utilization of the parameters. This enables the data processing system to provide user group adapted tab panel elements, which are automatically generated and updated during for example a training or a learning phase of the application program.

In accordance with an embodiment of the invention, the data processing system further comprises means for a user's selection of additional tab panel elements. All selected tab panel elements define a group of tab panel elements. All data values for all sub-sets of parameters entered into the respective data entry fields of the user selected group of tab panel elements out of the set of parameters mapped to tab panel element identifiers are used for controlling the data processing operation. Thereby, the data processing system further comprises means for combining the sub-sets of parameters in the defined group of tab panel elements by a logical AND or a logical OR or a logical XOR condition and the graphical user interface is adapted for user input of the logical combination conditions. This has the advantage, to leave it to the user to decide which tab panel elements are used in order to provide data values from the respective data entry fields to the application program. Instead of creating new tab panel elements comprising a combination of necessary data entry fields for controlling the data processing operation, a user can therefore assemble various data entry fields of different tab panel elements and individually define the logical combination conditions of the data values entered in the respective data entry fields.

In accordance with an embodiment of the invention, the data processing system further comprises means for defining the tab panel element as a favorite tab panel element. Thereby the graphical user interface is adapted for user input for defining the tab panel element as the favorite tab panel element. Alternatively or additionally, the data processing system may comprise means for tracking and analyzing of a user group specific utilization of the tab panel elements. In this case, the data processing system is adapted for a user group specific definition of the favorite tab panel elements based on the tracking and analyzing of the user group specific utilization of the tab panel elements.

Further, the graphical user interface is adapted to display the tab of the favorite tab panel element particularly highlighted. Also the graphical user interface is adapted to display the tab of the favorite tab panel element in a predefined and/or fixed position regarding other tab panel elements.

This has the advantage that tabs of important or most frequently used tab panel elements are presented in an easily and intuitively accessible way to the user. This is especially important in case the graphical user interface displays a multitude of tabs of respective tab panel elements at the same time. Important tab panel elements are immediately accessible, whereas less important tab panel elements have to be selected and accessed among a multitude of other tab panel elements.

In another aspect the invention relates to a method of providing a graphical user interface to a user, the graphical user interface being adapted to provide a set of parameters for controlling a data processing operation being executable by an application program. The method comprises assigning a user to a user group, generating user group specific sub-sets of the set of parameters, mapping the user group specific sub-sets to tab panel element identifiers and providing a tab panel element for each of the tab panel element identifiers. Each tab panel element is composed of a tab and a tab panel and each tab panel comprises data entry fields for entering data values for the sub-sets of parameters being mapped to the respective tab panel element identifier. Using this method, it is possible to provide user group adapted tab panel elements in order to satisfy the needs of the user group to control the data processing operation. A user group can thereby also comprise only one individual user.

In accordance with an embodiment of the invention, the method further comprises providing a dedicated control button in each of the tab panel elements, the control button being adapted to initiate a data processing operation by the user. The method further comprises tracking user specific usage of the set of parameters and generating user group specific tab panel elements based on the analysis of the user specific usage of the set of parameters. This enables a user to decide if he wants to personally define personal tab panel elements with respective sub-sets of parameters, or if the data processing system for example in a training sequence generates user group specific tab panel elements adjusted to the user group and based on the analysis of the user group specific usage of the set of parameters during that training sequence.

In accordance with an embodiment of the invention the method further comprises providing selection means enabling a user to define a group of tab panel elements. The method further comprises providing input means enabling a user to combine the sub-sets of parameters in the defined group of tab panel elements by a logical AND or a logical OR or a logical XOR condition.

In accordance with an embodiment of the invention, the method further comprises analyzing of frequency of user specific usage of the tab panel elements, user specific ranking of tab panel elements based on the frequency of the user specific usage of the tab panel elements and providing at least one favorite tab panel element based on the ranking of the tab panel elements. Hereby, the graphical user interface is displaying a favorite tab panel element in a predefined and/or fixed position regarding other tab panel elements. Again, this enables a user to access most important tab panel elements in an easy, fast and predefined way.

In another aspect the invention relates to a computer program product for providing a graphical user interface to a user, the user interface being adapted to provide a set of parameters for controlling a data processing operation being executable by an application program. Further, the computer program product comprises instructions for assigning a user to a user group, generating user group specific sub-sets of the set of parameters, mapping the user group specific sub-sets to tab panel element identifiers and providing a tab panel element for each of the tab panel element identifiers to the user. Thereby each tab panel element is composed of a tab and a tab panel and each tab panel comprises data entry fields for entering data values for the sub-set of parameters being mapped to the respective tab panel element identifier.

In accordance with an embodiment of the invention, the computer program product further comprises instructions for providing a dedicated control button in each of the tab panel elements, the control button being adapted to initiate the data processing operation.

In accordance with an embodiment of the invention, the computer program product further comprises instructions for tracking a user specific usage of the set of parameters, analyzing the user specific usage of the set of parameters and generating user specific groups based on the analysis of the user specific usage of the set of parameters. The computer program product further comprises instructions for providing selection means enabling a user to define a group of tab panel elements. The computer program product further comprises instructions for providing input means enabling a user to combine the sub-sets of parameters in the defined group of tab panel elements by a logical AND or a logical OR or a logical XOR condition.

In accordance with an embodiment of the invention, the computer program product further comprises instructions for analyzing of a frequency of user specific usage of the tab panel elements. A user specific ranking of tab panel elements is based on the frequency of the user specific usage of the tab panel elements. At least one favorite tab panel element is provided to the user by the graphical user interface based on the ranking of tab panel elements. Thereby the graphical user interface is adapted to display the tab of the favorite tab panel element in a predefined and/or fixed position regarding tabs of other tab panel elements.

Computer programs consistent with the invention can be installed as one or more programs or program modules on different hardware systems (computers or computer systems), and run separately and independently of each other, while in their entirety being capable of performing, for example the graphical user interfaces and embodiments disclosed herein. The different systems may be connected in the form of a network to communicate with each other.

Additional objects and advantages of the various embodiments of the invention will be set forth in part in the description, or may be learned by practice of the invention. The objects and advantages of the embodiments of the invention will be realized and attained by means of the elements and combinations particularly pointed out in the claims. The embodiments of the invention are disclosed herein and set forth in the claims.

The various embodiments can include and/or exclude different aspects, features and/or advantages, where applicable. In addition, various embodiments can combine one or more aspects or features of other embodiments, where applicable.

It is to be understood that both the forgoing general description and the following detailed description are exemplary and explanatory only and are not restrictive of the embodiments of the invention, as claimed. The description of aspects, features and/or advantages of particular embodiments should not be construed as limiting other embodiments or the claims.

### Brief description of the drawings

In the following preferred embodiments of the invention are described in greater detail by way of example only by making reference to the drawings in which:
- Figure 1: is a block diagram of an embodiment of a data processing system,
- Figure 2: shows a flowchart illustrating a method of executing an application program,
- Figure 3a: is a block diagram of a further embodiment of the data processing system,
- Figure 3b: is a history graph describing the usage frequency of tab panel elements,
- Figure 4: shows a flowchart illustrating an alternative method for executing an application program,
- Figures 5a-5c: illustrate an exemplary user interface consistent with an embodiment of the invention,
- Figure 5d: illustrates a further exemplary user interface consistent with an embodiment of the invention,
- Figures 6a-6c: illustrate a still further exemplary user interface consistent with an embodiment of the invention.

### Detailed description

Within the concept of this disclosure, the terms used shall have their usual meaning in the context of the field of data processing unless defined otherwise. Particularly, the computer system broadly refers to any stand alone computer such as a PC or a laptop or a series of computers connected via a network, e.g. a network within a company, or a series of computers connected via the internet. Computer systems and programs may be closely related. As used herein phrases such as 'the computer provides' and 'the program provides or performs specific actions', 'a user performs a specific action' are used to express actions by a computer system that may be controlled by a program or to express that a computer or program module may be designed to enable the computer system to perform the specific action or to enable a user to perform a specific action by means of a computer system.

The described graphical user interfaces and other embodiments of the invention may be implemented by means of a computer system and a software which allows the creation of business software applications and which allows the use of databases or database applications and internet applications.

In the following figures, like reference numerals are used for like descriptive elements.

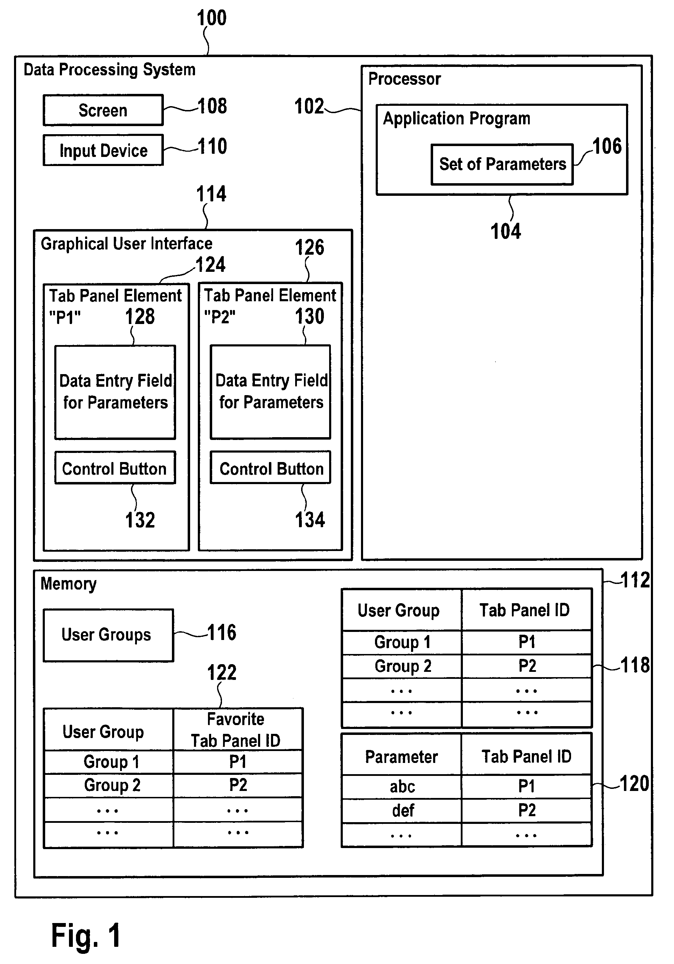

Figure 1 is a block diagram of an embodiment of a data processing system 100. The data processing system 100 may be implemented as a computer system comprising at least one computer or a network of computers. The data processing system 100 comprises a processor 102 suitable for the execution of an application program 104. The processor 102 may include, by way of example, both general and special purpose microprocessors, and any one or more processors of any kind of each digital computer. The processor 102 is adapted to receive a set of parameters for execution of the application program 104 by means of an interface 106.

To provide for interaction with a user, embodiments of the invention can be implemented on the data processing system 100 having a display device 108 such as a CRT (Cathode Ray Tube) or LCD (Liquid Crystal Display) monitor for displaying information to the user and input devices 110 like a keyboard and a pointing device such as a mouse or a trackball by which the user can provide input to the computer. Other kinds of devices can be used to provide for interaction with a user as well; for example, feedback provided to the user can be any form of sensory feedback, such as visual feedback, auditory feedback, or haptic feedback; and input from the user can be received in any form, including acoustic, speech, or haptic input.

The data processing system 100 further comprises a memory 112. The memory may comprise mass storage devices for storing data, e.g. magnetic, magneto-optical discs, or optical discs. The memory may also comprise any storage device suitable for embodying computer program instructions and data including all forms of non-volatile memory, including by way of example semiconductor memory devices, such as EPROM, EEPROM and flash memory devices; magnetic discs such as internal hard discs and removable discs; magneto-optical discs; and CD-ROM and DVD-ROM discs. The processor 102 and the memory 112 can be supplemented by, or incorporated in, ASICS (Application-Specific Integrated Circuits).

The data processing system 100 further comprises means for mapping sub-sets of the set of parameters to tab panel element identifiers. The memory 112 comprises a table of user groups 116. The table of user groups 116 assigns each user a specific user group. A user group may thereby comprise a multitude of users, as well as only a single user.

The user group mapping table 118 assigns each user group at least one tab panel element ID. For example the user group 'Group 1' is assigned the tab panel element ID 'P1'. Sub-sets of the set of parameters used for controlling the data processing operation are assigned in the parameter mapping table 120 to tab panel element IDs. In the present example, the parameter 'abc' is assigned to the tab panel element ID 'P1'. A given parameter may generally be assigned to as many different tab panel element IDs as necessary. Also, a tab panel element ID may be assigned a multitude of different parameters.

The memory 112 further comprises a favorite tab panel element ID mapping table 122. In this mapping table 122, a user group is assigned at least one favorite tab panel element ID. In the present example, the user group 'Group 1' is assigned the favorite tab panel element ID 'P1'. A given user group may be assigned as many favorite tab panel element IDs as necessary. Similarly a given favorite tab panel element ID may be assigned to as many user groups as necessary.

The data processing system 100 further comprises a graphical user interface 114. In the present example, the graphical user interface 114 comprises two tab panel elements, the tab panel element 'P1' 124 and the tab panel element 'P2' 126. The tab panel element 124 further comprises data entry fields 128 for entering data values for the sub-set of parameters being mapped to the tab panel element identifier 'P1' by means of the parameter mapping table 120. Similarly, the tab panel element 126 comprises data entry fields 130 for entering data values for the sub-set of parameters being mapped to the tab panel element identifier 'P2' by means of the parameter mapping table 120.

Each tab panel element 124 and 126 further comprise control buttons 132 and 134, which are adapted to initiate the data processing operation. For example, by applying the control button 132, the data values entered into the data entry fields 128 are transferred with means of the interface 106 to the application program 104 and the application program 104 is executed by the processor 102 applying only the data values entered into the data entry fields 128. Data values entered into any other data entry fields in other tab panel elements like data entry fields 130 in tab panel element 126 are not considered for execution of the application program 104.

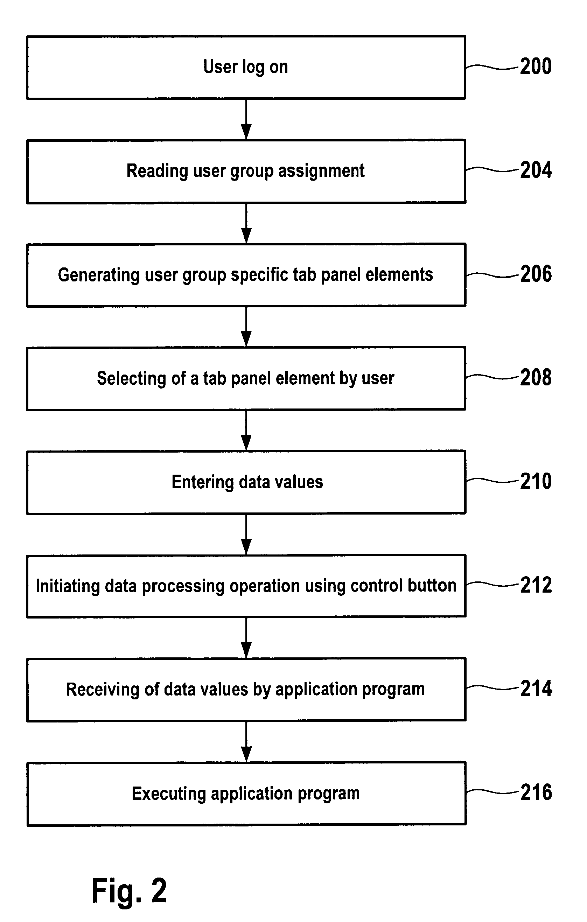

Figure 2 shows a flowchart illustrating a method for executing an application program. In step 200 a user logs onto a data processing system. In step 204 a respective user group assignment is read from a user group mapping table. In step 206 user group specific tab panel elements are generated using a parameter mapping table. Thereby, each tab panel element comprises data entry fields in order to enable the user to enter the sub-set of parameters assigned in the parameter mapping table to the respective tab panel element ID. In step 208 the user selects a specific tab panel. This is followed by entering respective data values in the data entry fields of the selected tab panel element in step 210. In step 212 the user initiates a data processing operation using a control button. In step 214 the data values entered in step 210 are received by the application program. Finally in step 216 the application program is executed for example by a microprocessor.

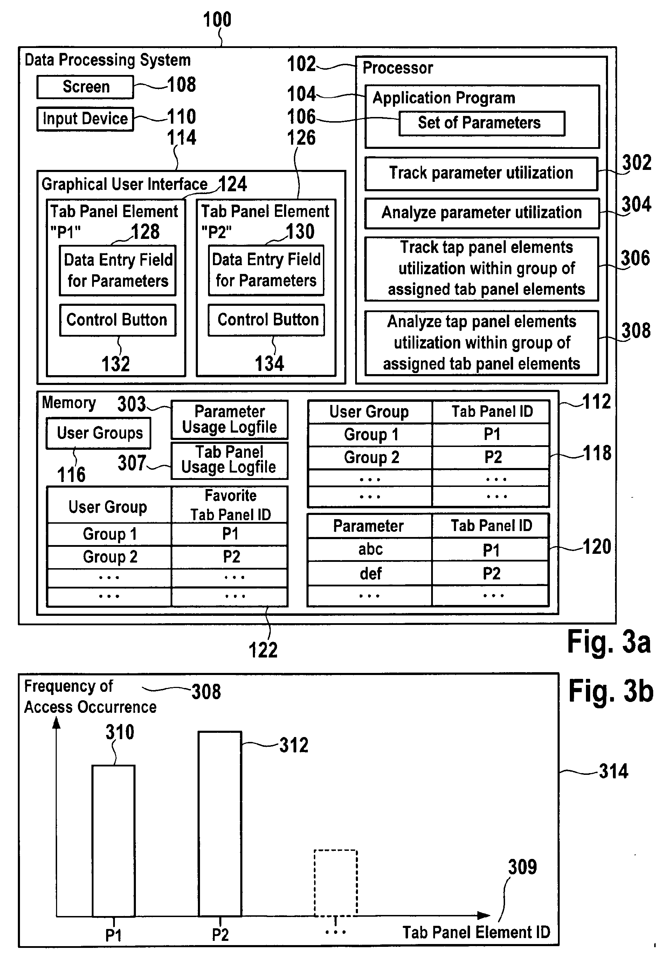

Figure 3a is a block diagram of a further embodiment of the data processing system 100 of figure 1. Different to figure 1, where the mapping of sub-sets of parameters to tab panel element identifiers with means of the parameter mapping table 120 is performed by a user input, the mapping of the parameters to tab panel element IDs is performed in figure 3 by the processor 102. This is for example accomplished using a learning phase of the data processing system 100, where for example computer instructions 302 are used to track a user group specific utilization of the parameters. The parameter utilization is thereby tracked in a parameter usage log file 303. Computer instructions 304 are used by the processor in order to analyze the user specific parameter utilization. Based on the analysis, the data processing system 100 performs a user specific mapping of the sub-sets of the parameters to respective tab panel element identifiers using the parameter mapping table 120.

In a similar way, based on the analysis of the user specific parameter utilization, tab panel elements containing most frequently used sub-sets of parameters are regarded as favorite tab panel elements with the favorite tab panel element IDs being mapped to respective user groups in the favorite tab panel element ID mapping table 122. In an alternative to the automatic assignment of parameters to tab panel element IDs and the user group specific assignment of user groups to favorite tab panel element IDs, a user group may individually assign parameters to tab panel element IDs with means of the parameter mapping table 120 and assign user groups to favorite tab panel element IDs with means of the favorite tab panel element ID mapping table 122.

Additionally to the assignment of favorite tab panel elements to user groups during the learning phase, the data processing system 100 can use computer instructions 306 to track a user group specific tab panel element utilization within the group of assigned tab panel elements. The tracking is performed using a tab panel group usage log file 307, which can also be adapted as a history graph describing the frequency of usage of tab panel elements for every user group. The log file 307 is analyzed using computer instructions 308 and user group specific favorite tab panel element IDs are mapped to respective user groups in the favorite tab panel element ID mapping table 122 according to the analysis of the tab panel group usage log file 307. In an alternative to the automatic assignment of user groups to favorite tab panel element IDs, a user group may individually determine tab panel elements as favorite tab panel elements with means of the favorite tab panel element ID mapping table 122.

Figure 3b is a history graph 314 describing the usage frequency of tab panel elements. The history graph 314 is composed of an axis of abscissae 309 and an axis of ordinates 308. The axis 309 describes tab panel element IDs and the axis 308 describes the frequency of accesses to the respective tab panel elements. Using the computer instructions 306 to track the user group specific tab panel element utilization within the group of assigned tab panel elements, the history graph 314 is built and updated. Based on several predefined criteria, user group specific tab panel elements are selected using the history graph 314 and respective favorite tab panel element IDs are mapped to respective user groups in the favorite tab panel element ID mapping table. The predefined criteria may comprise for example a certain threshold of accesses to tab panel elements in order to define the tab panel element as a respective favorite tab panel element. Or the predefined criteria may comprise for example a number of m most frequently used tab panel elements out of total number of n tab panel elements which will be defined as favorite tab panel elements. In the present example of figure 3b, three tab panel elements are displayed. The tab panel element with the tab panel element ID 'P2' is most frequently used by the respective user group and has therefore the highest frequency of access occurrence 312 compared to for example the tab panel element with the tab panel element ID 'P1' with the respective access occurrence 310.

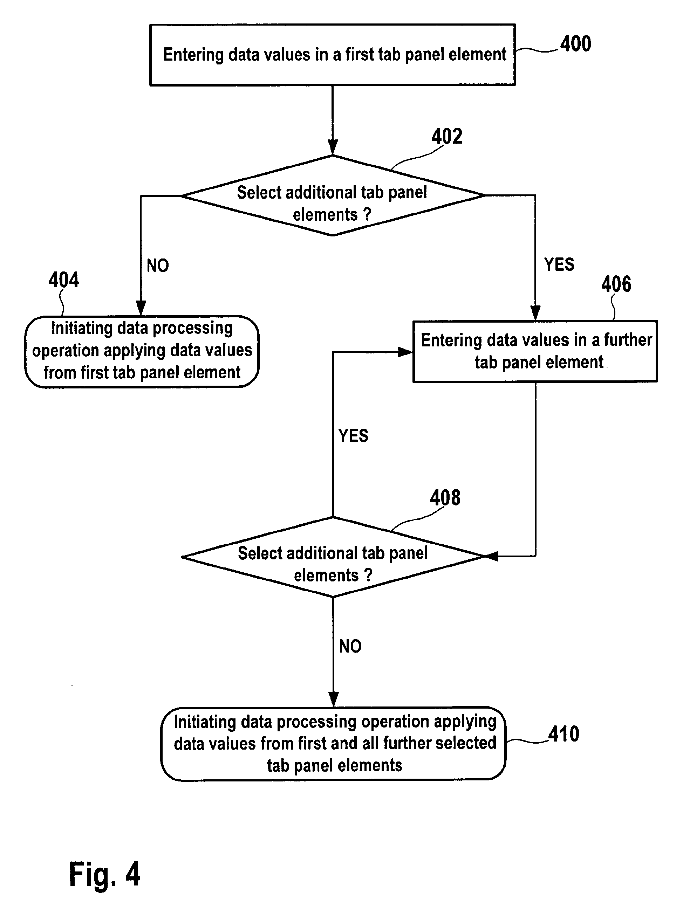

Figure 4 shows a flowchart illustrating an alternative method for executing an application program. In step 400 data values are entered in respective data entry fields of a first tab panel element. In step 402, the user decides if additional tab panel elements presenting data entry fields for further sub-sets of parameters are required in order to control a data processing operation being executable by the application program. If only the first tab panel element is selected, in step 404 the data processing operation is initiated and data values from respective data entry fields of the first tab panel element are applied for execution of the application program. If in step 402 an additional tab panel element is selected, respective data values are entered into the respective data entry fields of the further selected tab panel element in step 406. This step 406 is repeated, if in step 408 the user selects additional tab panel elements used for controlling the data processing operation. After selection of all tab panel elements and entering of all data values in respective data entry fields of the tab panel elements, the data processing operation is initiated in step 410. The data values from the first and all the further selected tab panel elements are used for execution of the application program 104 by for example the processor 102. As an alternative, additionally to step 406 besides entering data values in respective data entry fields of respective tab panel elements, the user may have the possibility for entering logical combination conditions of selected tab panel elements and/or individual data fields of selected tab panel elements. The logical combination conditions may comprise logical AND or logical or OR logical XOR conditions.

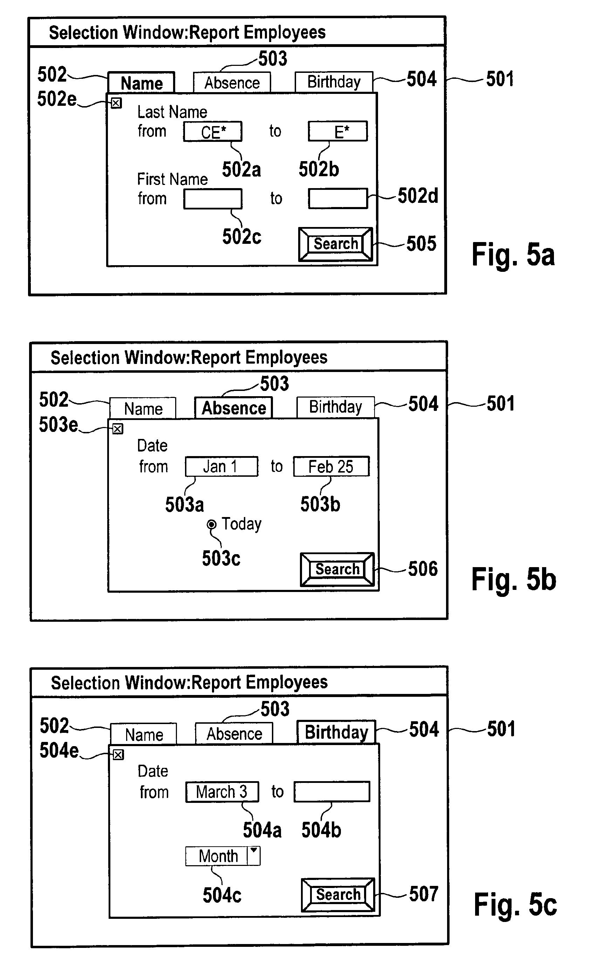

Figures 5a-5c illustrate an exemplary user interface 501 consistent with an embodiment of the invention. The graphical user interface 501 comprises three tab panel elements 502, 503 and 504. The three figures 5a-5c distinguish in that they show three different situations: in Figure 5a, tab panel element 502 titled 'name' is selected and active, in figure 5b tab panel element 502, titled 'absence' is selected and active and in figure 5c tab panel element 504, titled 'birthday' is selected and active. The selected tab panel elements are marked up, in the present example by a bold and underlined title. The graphical user interface 501 in this example provides a selection window for defining the parameters of a search to create a report on employees. Tab panel element 502 is designed in order to define a search according to the name of employees. It comprises four input fields 502a, 502b, 502c and 502d, which allow a user to input search criteria in order to search for ranges regarding last and first name. When applying button 505 on this tab panel element 502 the search is carried out according to only these criteria. What is entered in the tab panel elements 503 and 504 does not influence the search.

Different from tab panel element 502, the tab panel element 503 is designed in order to define a search according to the absence of employees. It comprises two input fields 503a, 503b and the check box 503c. By way of the data fields 503a, 503b a range of absence dates may be defined. Alternatively or in addition, the date of 'today' may be selected or edited from the search. When applying button 506 on this tab panel element 503, the search is carried out using only these criteria. What is selected or entered in tab panel elements 502 and 504 does not influence the search.

Tab panel element 504 is designed in order to define a search according to birthday dates. It comprises two input fields 504a and 504b and a drop down menu 504c. By way of the two input fields 504a, 504b a range of dates may be defined for the search by the user. Alternatively or in addition a month may be defined as a further criteria by the user with drop down menu 504c. When applying the button 507 on this tab panel element 504, a search of employees is carried out using only these criteria and whatever has been selected or entered in tab panel elements 502 and 503 does not influence the search.

It has to be noted, that the 'search' buttons 505, 506 and 507 do not necessarily have to be located on the respective tab panel elements 502, 503 or 504. It is also possible to place one common 'search' button outside the tab panel elements 502, 503 and 504. When applying this common 'search' button, the search is carried out using only the criteria entered in the respective currently selected and edited tab panel element. What is selected or entered in any other tab panel elements does not influence the search.

The tab panel elements 502, 503 and 504 further comprise check boxes 502e, 503e and 504e. When applying the check boxes 502e, 503e and/or 504e, the respective tab panel elements 502, 503 and/or 504 are defined as favorite tab panel elements. The graphical user interface 501 may be adapted to display the tab of a selected favorite tab panel element in a predefined and/or fixed position regarding other tabs of respective tab panel elements. This is especially important, if a large multitude of tabs are present in the graphical user interface 501 and a designated tab panel element needs to be accessible in an easy way. Additionally to displaying the tab of the favorite tab panel element in a predefined and/or fixed position regarding the other tab panel elements, the graphical user interface 501 may be adapted to display the favorite tab panel element particularly highlighted.

As an alternative for the definition of favorite tab panel elements by the user, the data processing system may comprise means for tracking and analyzing a user specific utilization of the tab panel elements 502, 503 and 504, and favorite tab panel elements are defined by the data processing system based on the tracking and analyzing of the user specific utilization of the tab panel elements 502, 503 and 504.

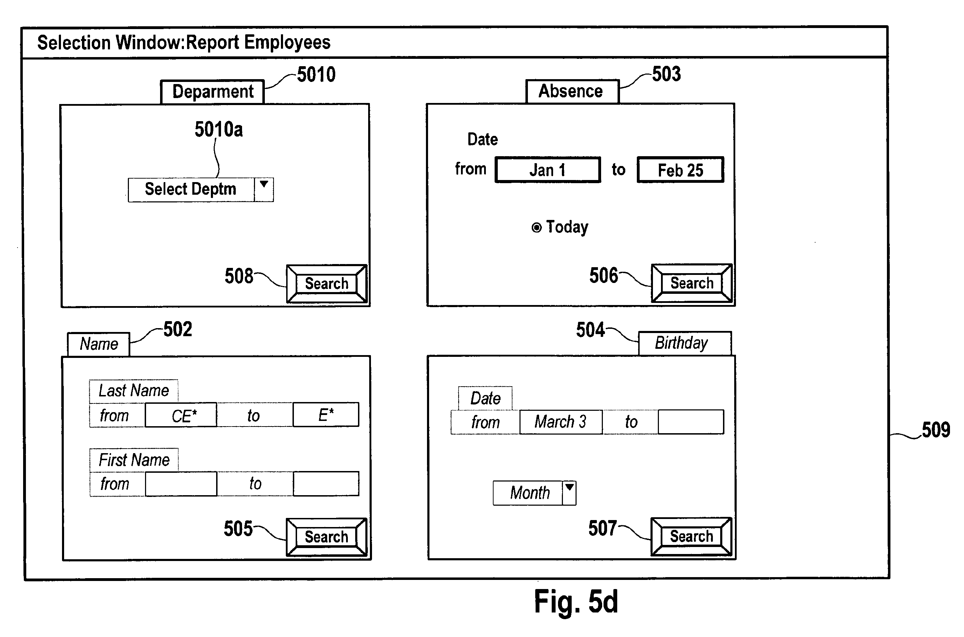

Referring now to figure 5d, a further embodiment of the invention is illustrated by way of a block diagram of an exemplary graphical user interface 509. User interface 509 differs from user interface 501 in that a further tab panel element 5010 is available. Tab panel element 5010 is designed in order to define a further search criterion or further search criteria, which may be combined with other search criteria in the other tab panel elements 503, 504 and 505. Their combination may be made effective e.g. by selecting the desired number of tab panel elements. In this example, tab panel elements 5010 and 503 are selected. This selection is marked up by way of a title in bold letters and underlined. The unselected tab panel elements 502 and 504 may be marked up as well, in this example by cursive letters and dotted lines. In this example the further search criteria made available by tab panel element 5010 is a department which may be specified via a drop down menu 5010a. When applying either button 508 or 506 on one of the tab panel elements 503 or 5010, a search on employees is carried out using the search criteria of the selected tab panel elements. The combination of the search conditions of and in the selected tab panel elements may be a logical AND or a logical OR or a logical XOR condition.

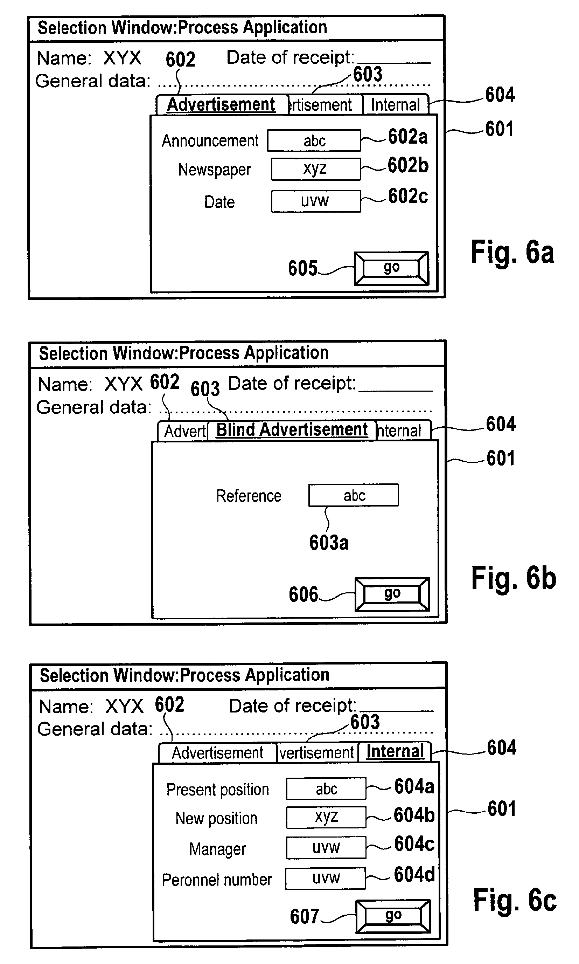

Referring now to figures 6a-6c, a further embodiment of the invention is illustrated by way of a block diagram of an exemplary graphical user interface 601. Figures 6a-6c show a graphical user interface 601, which provides a selection window enabling a user to select one of one or more sub-processes of a more general process and to start the selected sub-process with specific parameters. In this example the more general process is an application process within a company and the sub-processes are: application by advertisement, application by blind advertisement and internal application. The user interface 601 comprises a header section with general data of the applicant and three tab panel elements 602, 603 and 604, each tab panel element being designed to enable a user to start the respective sub-process indicated in the title with specific data values. The three figures 6a-6c distinguish in that 'advertisement' is selected and active. In figure 6b the tab panel element 603, titled 'blind advertisement' is selected and active. In figure 6c the tab panel element 604, titled 'internal' is selected and active. The selected tab panel elements are marked up, in this example by a bold and underlined title. The tab panel element 602 is designed in order to define or enter the data values for the sub-process of application by advertisement and to start the sub-process. It comprises three data entry fields 602a, 602b, and 602c, in which data values of a predefined meaning, in the example announcement, newspaper and date, may be entered or selected by a user. When applying button 605, the respective sub-process is called with the data defined via tab panel element 602.

Tab panel element 603 (figure 6b) is designed in order to define or enter the data values for the sub-process of application by applying the advertisement to start the sub-process. It comprises one data entry field 603a into which a reference may be entered. When applying button 606 of this tab panel element, the respective sub-process is started with data values defined via this tab panel element.

Tab panel element 604 (figure 6c) is designed in order to define for entry of the data for the sub-process of internal application. It comprises four data entry fields 604a, 604b, 604c and 604d into which information relating to the present position of the applicant, his new position, his manager and/or his personal number can be entered. When applying button 607 of this tab panel element, the sub-process of internal application is started with this information.

It has to be noted, that for execution of the respective sub-processes, only the data values entered into the respective data entry fields of the currently active tab panel element are relevant for the sub-process and all other data values in other data entry fields of other tab panel elements are not considered.

Modifications and adaptations of the present invention will be apparent to those skilled in the art from consideration of the specification and practice of the embodiments and features disclosed herein. The foregoing description has been presented for purposes of illustration and description. It is not exhaustive and does not limit embodiments of the invention to the precise forms disclosed. Modifications and variations are possible in light of the above teachings or may be acquired from the practicing embodiments consistent with the invention. For example, the described implementation includes software, but systems and methods consistent with the present invention may be implemented as a combination of hardware and software or in hardware alone. Additionally, although aspects of the present invention are described as being stored in memory, one skilled in the art will appreciate that these aspects can also be stored on other types of computer-readable media, such as secondary storage devices, for example, hard disks, floppy disks, or CD-ROM; the Internet or other propagation medium; or other forms of RAM or ROM.

Computer programs based on the written description and flow charts of embodiments of the invention are within the skill of an experienced developer. The various programs or program modules can be created using any of the techniques known to one skilled in the art or can be designed in connection with existing software. For example, programs or program modules can be designed in or by means of Java, C++, HTML, XML, or HTML with included Java applets or in SAP R/3 or ABAP. One or more of such modules can be integrated in existing e-mail or browser software.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. Further, means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited.

Other embodiments of the invention will be apparent to those skilled in the art from consideration of the specification and practice of the invention disclosed herein. It is intended, therefore, that the specification and examples be considered as exemplary only, with a true scope and spirit of the invention being indicated by the claims.

### List of Reference Numerals

- 100: data processing system
- 102: processor
- 104: application program
- 106: interface
- 108: display device
- 110: input device
- 112: memory
- 114: graphical user interface
- 116: table of user groups
- 118: user group mapping table
- 120: parameter mapping table
- 122: favorite tab panel ID mapping table
- 124: tab panel element
- 126: tab panel element
- 128: data entry field
- 130: data entry field
- 132: control button
- 134: control button
- 302: computer instructions
- 304: computer instructions
- 306: computer instructions
- 308: computer instructions
- 303: parameter usage logfile
- 307: tab panel group usage logfile
- 308: axis of ordinates
- 309: axis of abscissae
- 310: frequency of access occurrence
- 312: frequency of access occurrence
- 314: history graph
- 501: graphical user interface
- 502: tab panel element
- 503: tab panel element
- 504: tab panel element
- 502a: input field
- 502b: input field
- 502c: input field
- 502d: input field
- 502e: input field
- 503a: input field
- 503b: input field
- 503c: input field
- 503e: input field
- 504a: input field
- 504b: input field
- 504c: input field
- 504e: input field
- 505: button
- 506: button
- 507: button
- 5010: tab panel element
- 5010a: input field
- 508: button
- 509: graphical user interface
- 601: graphical user interface
- 602: tab panel element
- 603: tab panel element
- 604: tab panel element
- 602a: input field
- 602b: input field
- 602c: input field
- 603a: input field
- 604a: input field
- 604b: input field
- 604c: input field
- 604d: input field
- 605: button
- 606: button
- 607: button

## Claims

1. A data processing system (100) comprising
- at least one application program (104), the application program (104) being adapted to receive a set of parameters (106) for controlling a data processing operation being executable by the application program (104),
- means (120) for mapping sub-sets of the set of parameters to tab panel element identifiers,
- a graphical user interface (114; 501; 509; 601) for providing a tab panel element (124; 126; 502 ... 504; 5010; 602 ... 604) for each of the tab panel element identifiers, each tab panel element being composed of a tab and a tab panel, each tab panel comprising data entry fields (128; 130; 502a ... 504d; 5010a; 602a ... 604d) for entering data values for the sub-set of parameters being mapped to the respective tab panel element identifier,
- means (102) for execution of the application program, the means being adapted to only use the data values of the sub-set of parameters entered in the data entry fields of a user selected tab panel out of the set of parameters mapped to tab panel element identifiers for controlling the data processing operation.

2. The data processing system (100) of claim 1, further comprising a dedicated control button (132; 134; 505; 506; 507; 508; 605; 606; 607) being available in each of the tab panel elements, the control button being adapted to initiate the data processing operation.

3. The data processing system (100) of claim 1, further comprising means for mapping of sub-sets of parameters to tab panel element identifiers, the graphical user interface being adapted for a user input of the mapping.

4. The data processing system (100) of claim 1, the data processing system (100) comprising means (302; 304) for tracking and analyzing of a user group specific utilization of the parameters, the data processing system (100) being adapted for a user specific mapping of the sub-sets of the parameters to the tab panel element identifiers based on the tracking and analyzing of the user group specific utilization of the parameters.

5. The data processing system (100) of claim 1, further comprising means for a user selection of additional tab panel elements, all selected tab panel elements defining a group of tab panel elements with all data values for all sub-sets of parameters entered into the respective data entry fields of the user selected group of tab panel elements out of the set of parameters mapped to tab panel element identifiers being used for controlling the data processing operation.

6. The data processing system (100) of claim 5, further comprising means for combining the sub-sets of parameters in the defined group of tab panel elements by a logical AND or a logical OR or a logical XOR condition, the graphical user interface being adapted for a user input of the logical combination conditions.

7. The data processing system (100) of claim 1, further comprising means (122; 502e; 503e; 504e) for defining the tab panel element as a favorite tab panel element.

8. The data processing system (100) of claim 7, wherein the graphical user interface is adapted for a user input (502e; 503e; 504e) for defining the tab panel element as the favorite tab panel element.

9. The data processing system (100) of claim 7, the data processing system (100) comprising means (306; 308) for tracking and analyzing of a user group specific utilization of the tab panel elements, the data processing system (100) being adapted for a user group specific definition of the favorite tab panel element based on the tracking and analyzing of the user group specific utilization of the tab panel elements.

10. The data processing system (100) of claim 7, wherein the graphical user interface is adapted to display the tab of the favorite tab panel element particularly highlighted.

11. The data processing system (100) of claim 7, wherein the graphical user interface is adapted to display the tab of the favorite tab panel element in a predefined and/or fixed position regarding other tab panel elements.

12. A method of providing a graphical user interface (114; 501; 509; 601) to a user, the graphical user interface being adapted to provide a set of parameters (106) for controlling a data processing operation being executable by an application program (104), comprising:
- assigning a user to a user group (116),
- generating user group specific sub-sets of the set of parameters,
- mapping (118) the user group specific sub-sets to tab panel element identifiers,
- providing a tab panel element (124; 126; 502 ... 504; 5010; 602 ... 604) for each of the tab panel element identifiers, each tab panel element being composed of a tab and a tab panel, each tab panel comprising data entry fields fields (128; 130; 502a ... 504d; 5010a; 602a ... 604d) for entering data values for the sub-set of parameters being mapped to the respective tab panel element identifier.

13. The method of claim 12, further comprising providing a dedicated control button (132; 134; 505; 506; 507; 508; 605; 606; 607) in each of the tab panel elements, the control button being adapted to initiate the data processing operation.

14. The method of claim 12, further comprising:
- tracking (302) user specific usage of the set of parameters,
- analyzing (304) the user specific usage of the set of parameters,
- generating user group specific tab panel elements based on the analysis of the user specific usage of the set of parameters.

15. The method of claim 12, further comprising providing selection means enabling a user to define a group of tab panel elements.

16. The method of claim 15, further comprising providing input means enabling a user to combine the sub-sets of parameters in the defined group of tab panel elements by a logical AND or a logical OR or a logical XOR condition.

17. The method of claim 12, further comprising:
- analyzing (308) of frequency of user specific usage of the tab panel elements,
- user specific ranking of tab panel elements based on the frequency of the user specific usage of the tab panel elements,
- providing at least one favorite tab panel element based on the ranking of tab panel elements, the graphical user interface being adapted to display the tab of the favorite tab panel element in a predefined and/or fixed position regarding other tab panel elements.

18. The method of claim 17, wherein the analyzing of frequency of user specific usage of the tab panel elements is performed using a tab panel elements history graph (314).

19. A computer program product for providing a graphical user interface (114; 501; 509; 601) to a user, the user interface being adapted to provide a set of parameters (106) for controlling a data processing operation being executable by an application program (104), the computer program product comprising instructions for:
- assigning a user to a user group (116),
- generating user group specific sub-sets of the set of parameters,
- mapping (118) the user group specific sub-sets to tab panel element identifiers,
- providing a tab panel element 124; 126; 502 ... 504; 5010; 602 ... 604) for each of the tab panel element identifiers, each tab panel element being composed of a tab and a tab panel, each tab panel comprising data entry fields for entering data values for the sub-set of parameters being mapped to the respective tab panel element identifier.

20. The computer program product of claim 19, further comprising instructions for providing a dedicated control button (132; 134; 505; 506; 507; 508; 605; 606; 607) in each of the tab panel elements, the control button being adapted to initiate the data processing operation.

21. The computer program product of claim 19, further comprising instructions for
- tracking (302) user specific usage of the set of parameters,
- analyzing (304) the user specific usage of the set of parameters,
- generating user group specific tab panel elements based on the analysis of the user specific usage of the set of parameters.

22. The computer program product of claim 19, further comprising instructions for providing selection means enabling a user to define a group of tab panel elements.

23. The computer program product of claim 22, further comprising instructions for providing input means enabling a user to combine the sub-sets of parameters in the defined group of tab panel elements by a logical AND or a logical OR or a logical XOR condition.

24. The computer program product of claim 19, further comprising instructions for
- analyzing (308) of frequency of user specific usage of the tab panel elements,
- user specific ranking of tab panel elements based on the frequency of the user specific usage of the tab panel elements,
- providing at least one favorite tab panel element based on the ranking of tab panel elements, the graphical user interface being adapted to display the tab of the favorite tab panel element in a predefined and/or fixed position regarding other tab panel elements.
